(19) Europäisches Patentamt
European Patent Office
Office européen des brevets

(11) EP 0 692 508 A1

# (12) EUROPÄISCHE PATENTANMELDUNG

(43) Veröffentlichungstag:
**17.01.1996 Patentblatt 1996/03**

(51) Int. Cl.[6]: **C08G 61/12**

(21) Anmeldenummer: **95110215.1**

(22) Anmeldetag: **30.06.1995**

(84) Benannte Vertragsstaaten:
**BE DE ES FR GB NL**

(30) Priorität: **11.07.1994 DE 4424039**

(71) Anmelder: **BASF AKTIENGESELLSCHAFT**
**D-67056 Ludwigshafen (DE)**

(72) Erfinder:
- **Heitz, Thomas, Dr.**
  **D-67125 Dannstadt-Schauernheim (DE)**
- **Glück, Alexander, Dr.**
  **D-67098 Bad Dürkheim (DE)**
- **Heitz, Walter, Prof. Dr.**
  **D-35274 Kirchhain (DE)**
- **Richter, Ralf**
  **D-35091 Cölbe (DE)**

## (54) Amphotere Metalloxide als Cokatalysator bei der elektrophilen Synthese von Polyaryletherketonen

(57) Verfahren zur Herstellung von Polyaryletherketonen durch elektrophile Polykondensation unter Verwendung von Carbonsäurehalogeniden als Monomerbestandteil in Gegenwart einer Lewis-Säure, wobei der Reaktionsmischung vor oder während der Polykondensation 0,001 bis 60 Gew.-% eines inerten Füllstoffs oder einer bei der Aufarbeitung in einen inerten Füllstoff überführbaren Komponente zugesetzt werden.

EP 0 692 508 A1

## Beschreibung

Die Erfindung betrifft ein Verfahren zur Herstellung von Polyaryletherketonen durch elektrophile Polykondensation unter Verwendung von Carbonsäurehalogeniden als Monomerbestandteil in Gegenwart einer Lewis-Säure.

Polyaryletherketone, insbesondere alle para-verknüpften Polyaryletherketone, zeichnen sich durch eine Vielzahl interessanter Eigenschaften aus, wie z.B. thermoplastische Verarbeitbarkeit, Hochtemperaturstabilität, mechanische Stabilität und hervorragende Chemikalienbeständigkeit.

Zur Herstellung von Polyaryletherketonen wurden in der Literatur zwei Synthesewege beschrieben. Bei der nucleophilen Verfahrensweise werden Etherbindungen zwischen gegenüber einer nucleophilen aromatischen Substitution aktivierten Aromaten und Hydroxyaromaten aufgebaut.

Bei der elektrophilen Verfahrensweise werden unter Ausbildung einer Diaryl-Keton-Verknüpfung allgemein aromatische Dicarbonsäurederivate oder Phosgen mit geeigneten aromatischen Verbindungen, welche zwei durch elektrophile Substitution austauschbare Wasserstoffatome enthalten, umgesetzt oder ein aromatisches Carbonsäurederivat, welches sowohl eine Säurederivatgruppe als auch ein substituierbares Wasserstoffatom enthält, mit sich selbst polykondensiert. In den Schriften US 34 41 538, US 34 42 857, US 9 53 400, DE-A 32 41 444, DE-A 34 16 445 und DE-A 34 16 446 werden elektrophile Polykondensationsreaktionen beschrieben, in denen HF als Lösungsmittel und $BF_3$ als Katalysator verwendet wird. Alternativ können auch halogenierte Kohlenwasserstoffe als Lösungsmittel in Kombination mit anderen Lewis-Säuren, insbesondere $AlCl_3$, als Katalysator verwendet werden.

Es hat sich in diesen Fällen als vorteilhaft erwiesen, die Reaktion in Gegenwart einer in mehr als stöchiometrischen Mengen einzusetzenden Lewis-Base durchzuführen, um die Aktivität der Lewissäure abzuschwächen und so die Substitution des elektronenreichen Aromaten durch das Säurechlorid selektiv in para-Stellung zu lenken. Unerwünschte Nebenreaktionen mit dem Lösungsmittel oder ortho-Substitutionen des elektronenreichen Aromaten durch das Säurechlorid können so weitgehend unterdrückt werden (WO 84/03891 und WO 84/03892). Die Unterdrückung von Nebenreaktionen, wie z.B. der Alkylierung der Polyaryletherketone durch das Lösungsmittel oder der ortho-Acylierung aktivierter Aryloxygruppen, führt zu einem technisch brauchbaren Molekulargewicht und ausreichender Schmelzestabilität der Polymere und ermöglicht die Verarbeitung der Produkte durch Extrusion oder Spritzguß.

Allen elektrophilen Polykondensationsverfahren gemeinsam ist die hydrolytische Aufarbeitung der Produkte, wobei der intermediär gebildete Polyaryletherketon-Lewissäure-Komplex zerstört wird. Bei dieser hydrolytischen Aufarbeitung entstehen in großem Umfang wäßrige Lösungen von Lewissäure-Katalysatoren, insbesondere Aluminiumchlorid, die zu einer Abwasserbelastung führen. Insbesondere der Einsatz von Lewis-Basen als Moderator bei der Polykondensation verursacht einen signifikant höheren Verbrauch an Lewis-Säure-Katalysator, da ein Teil des Lewissäure-Katalysators durch Komplexierung mit der Lewis-Base inaktiviert wird. Gemäß der US-A 4 709 007 wird je Äquivalent an eingesetzter Lewis-Base ein weiteres Äquivalent an Katalysator benötigt, wobei die üblicherweise eingesetzte Menge an Lewis-Base bevorzugt 0.5 Äquivalente, bezogen auf die im Polymeren vorhandenen Carbonylgruppen, beträgt. Dies führt zu einer Vergrößerung der Abwasserbelastung durch Restmengen von Lewis-Base sowie durch Hydrolyse-Produkte des Friedel-Crafts-Katalysators.

Aufgabe der vorliegenden Erfindung war daher die Entwicklung eines Verfahrens zur Herstellung von Polyaryletherketonen durch elektrophile Polykondensation, welches die vorstehend geschilderten Nachteile nicht aufweist, aber nach welchem dennoch hochmolekulare, kristalline und schmelzestabile Polyaryletherketone hergestellt werden können.

Diese Aufgabe wurde erfindungsgemäß gelöst durch ein Verfahren zur Herstellung von Polyaryletherketonen durch elektrophile Polykondensation unter Verwendung von Carbonsäurederivaten und elektronenreichen Aromaten als Monomerbestandteilen in Gegenwart einer Lewis-Säure als Katalysator, wobei der Reaktionsmischung vor oder während der Polykondensation 0.01 bis 60 Gew.-% eines inerten Füllstoffes oder einer während der Aufarbeitung in einen inerten Füllstoff verwandelbaren Komponente zugesetzt werden.

Bevorzugte Ausführungsformen des Verfahrens sind in den Unteransprüchen beschrieben.

Für die elektrophile Polykondensation geeignete Carbonsäurederivate, insbesondere Carbonsäurehalogenide sind dem Fachmann bekannt und in der Literatur, insbesondere auch in den eingangs zitierten Patentschriften beschrieben, so daß sich hier nähere Angaben erübrigen. Nur beispielhaft seien als bevorzugte Carbonsäurehalogenide die Chloride der Tere- und/oder Isophthalsäure genannt.

Auch die geeigneten elektronenreichen Aromaten sind dem Fachmann bekannt und in der genannten Literatur beschrieben, weshalb hier wegen näherer Einzelheiten auf die dort gemachten Ausführungen verwiesen wird. Besonders bevorzugte Verbindungen sind 4,4-Diphenoxybenzophenon, Diphenylether, 1,4-Diphenoxybenzol, 1,4-Bis-(4-phenoxybenzoyl)benzol, um nur vier Vertreter zu nennen.

Das beanspruchte Verfahren eignet sich zur Herstellung von Polyaryletherketonen mit beliebigen wiederkehrenden Einheiten, d.h. prinzipiell allen Polymeren, in deren Hauptkette aromatische Struktureinheiten im wesentlichen durch -CO- oder -O- Brücken miteinander verknüpft sind. Neben diesen Verknüpfungsarten können in kleineren Anteilen auch andere verknüpfende Einheiten, z.B. - $SO_2$-, vorhanden sein.

Bevorzugte Polyaryletherketone haben die Struktur

$$\left[ O - Ar_1 \left[ Q' - Ar_2 \right]_s O - Ar_3 - CO \left[ Ar_4 - T' \right]_t Ar_5 \right] \qquad (I)$$

wobei s und t jeweils den Wert 0, 1, 2 oder 3 haben und Q' und T' jeweils -O- oder -CO- sein können. $Ar_1$, $Ar_2$, $Ar_3$, $Ar_4$, und $Ar_5$ sind jeweils unabhängig voneinander eine m-Phenylen-, p-Phenylen, Biphenylen- oder Naphtylengruppe oder ein $C_1$-$C_{12}$-Alkyl-, $C_1$-$C_6$-Alkoxy-, Aryl-, Chlor- oder Fluorderivat einer solchen Gruppe. Bevorzugt werden Polyaryletherketone, in denen Q' und T' -CO- sind und s und t den Wert 1 haben.

Das erfindungsgemäße Verfahren wird in Gegenwart einer Lewis-Säure und vorzugsweise in einem unter den Reaktionsbedingungen inerten Lösungsmittel durchgeführt.

Die Lewis-Säure wird dabei in einem Überschuß, bezogen auf die molare Menge an eingesetzten Carbonylgruppen und Säurehalogenidgruppen eingesetzt, wobei der Überschuß ausreichend sein muß, um die Reaktion zu katalysieren. Im allgemeinen reicht ein molarer Überschuß von 0.02 bis 1.00 Äquivalenten an Lewis-Säure, vorzugsweise von 0.1 bis 0.8 Äquivalenten Lewis-Säure bezogen auf die molare Menge an vorhandenen Carbonylgruppen und Säurehalogenidgruppen für diesen Zweck aus. Besonders bevorzugt wird ein Überschuß von 0.3 bis 0.6 Äquivalenten an Lewissäure.

Sind in den Monomeren basische Gruppen, wie z.B. Sulfongruppen vorhanden, so bezieht sich der Überschuß an Lewis-Säure vorteilhaft auf die Menge an eingesetzten Carbonylgruppen, Säurehalogenidgruppen und weiteren basischen Gruppen beziehen.

Als Lewis-Säuren eignen sich für das erfindungsgemäße Verfahren grundsätzlich alle Verbindungen, die ein einsames Elektronenpaar von einer Verbindung koordinieren können. Entsprechende Verbindungen sind dem Fachmann bekannt und in der Literatur beschrieben, insbesondere in den eingangs genannten Patentschriften. Beispielhaft seien hier $AlCl_3$, $AlBr_3$, $InCl_3$, $GaCl_3$, $BCl_3$, $ZnCl_2$, $FeCl_3$, $SnCl_4$, $TiCl_4$, und $MoCl_5$ genannt, wobei insbesondere wasserfreies $AlCl_3$ bevorzugt wird.

Als inerte Lösungsmittel werden bevorzugt polare Lösungsmittel eingesetzt, deren Dielektrizitätskonstante mindestens 2.5, vorzugsweise 4.0 bis 25 (bei 25°C), beträgt. Beispielhaft seien hier Methylenchlorid, Schwefelkohlenstoff, 1,2-Dichlorethan, 1,1,2,2-Tetrachlorethan und 1,2-Dichlorbenzol sowie deren Mischungen genannt. Besonders bevorzugt wird Methylenchlorid.

Die Temperatur, bei der die Reaktion durchgeführt wird, liegt im allgemeinen im Bereich von -60 bis 150°C, vorzugsweise im Bereich von -30 bis 30°C.

Obwohl es vorteilhaft ist, alle Lösungsmittel und Monomere wasserfrei einzusetzen, haben sich doch in manchen Fällen geringe Spuren Wasser als für den Reaktionsverlauf günstig erwiesen.

Erfindungsgemäß werden der Reaktionsmischung vor oder während der Polykondensation 0,01 bis 60, vorzugsweise 0,1 bis 50 Gew.-%, bezogen auf die Menge an gebildetem Polyaryletherketon, eines inerten Füllstoffs oder einer während der nachfolgenden Aufarbeitung in einen inerten Füllstoff überführbaren Verbindung zugesetzt.

Geeignete Füllstoffe stellen amphotere Metalloxide, Derivate davon, wie z.B. Oxide, Alkoxide oder Hydroxide des Aluminiums, Alkali- bzw. Erdalkalimetall-Doppelsalze des Aluminiums und Alumosilikate dar, wobei Aluminiumoxid in einer Menge von 5 bis 20 Gew.-% bevorzugt wird.

Das erfindungsgemäße Verfahren wird bevorzugt ohne die Zugabe von Lewis-Basen während der Polykondensation durchgeführt; für die Qualität der hergestellten Polyaryletherketone stören jedoch prinzipiell bei der Kondensation vorhandene Lewis-Basen nicht, sie bringen aber auch keinen Vorteil. Zum Aufbau von hochmolekularen, schmelzestabilen Polyaryletherketonen werden demnach Lewis-Basen nicht mehr zwingend benötigt.

Das erfindungsgemäße Verfahren liefert auf einfache Weise qualitativ hochwertige, hochmolekulare, schmelzestabile und kristalline Polyaryletherketone, ohne daß der Einsatz von Lewis-Basen bei der Polykondensation erforderlich ist. Die nach dem erfindungsgemäßen Verfahren hergestellten Polyaryletherketone zeichnen sich sogar überraschenderweise durch eine höhere Schmelzstabilität auf als Produkte, die in Gegenwart von Lewis-Basen polykondensiert wurden. Weiterhin erfordert die Polykondensation in Gegenwart amphoterer Metalloxide ohne den Einsatz von Lewis-Basen signifikant geringere Mengen an Lewis-Säure-Katalysator, woraus sich bei der hydrolytischen Aufarbeitung ein ökologischer Vorteil durch eine deutlich geringere Belastung des Abwassers ergibt. Eine geringere Salzfracht des Abwassers ergibt sich weiterhin aus der Möglichkeit, die erfindungsgemäß bevorzugten Lewis-Säure-Katalysatoren, wie z.B. wasserfreie Halogenide des Aluminiums, nach hydrolytischer Aufarbeitung der Produkte als amphotere Metalloxide bei der Polykondensation wieder einzusetzen. Die amphoteren Metalloxide verbleiben dann als inerter Füllstoff in dem Polymeren und erhöhen wie in DE-C 2 419 044 beschrieben die Schmelzestabilität der Produkte.

Nach erfolgter Polykondensation arbeitet man die Reaktionsmasse nach bekannten und in der Literatur beschriebenen Verfahren auf. Vorzugsweise wird hierzu eine Lewis-Base zugegeben, deren Komplexbildungskonstante zu der

Lewissäure größer ist als deren Komplexbildungskonstante zu den Carbonylgruppen des Polymers und die daher aus dem Lewis-Säure-Polymer-Komplex das freie Polymer freisetzt. Beispiele für solche Lewis-Basen finden sich in der bereits erwähnten WO 84/03891. Bevorzugt werden Wasser und Methanol oder deren Mischungen verwendet. Nach dieser Dekomplexierung und gegebenenfalls Zerkleinerung des Produkts kann dieses zur Reinigung noch mit einem geeigneten Lösungsmittel extrahiert werden.

Beispiele

Beispiel 1
(Einsatz von basischem Aluminiumoxid als inertem Füllstoff)

Ein 1 l Planschliffkolben mit KPG-Rührer, Rückschlagventil und Gaseinleitungsrohr wurde dreimal evakuiert und mit Stickstoff gefüllt. Bei -30°C wurden 111.374 g (0.835 mol) Aluminiumtrichlorid und 20.00 g (0.196 mol) Aluminiumoxid (basisch, Aktivitätsstufe I, Korngröße 0.063-0.200 mm, Merck AG) in 180 ml Methylenchlorid suspendiert und 15 Minuten bei dieser Temperatur gerührt (900 U/min). Zu der Katalysatorsuspension wurden bei -30°C nacheinander 1.012 g (0.0070 mol) Benzoylchlorid, 40.605 g (0.200 Mol) Terephthalsäuredichlorid und 74.603 g (0.204 mol) 4,4'-Diphenoxybenzophenon zugegeben. Unter kräftigem Rühren (900 U/min) wurde die Reaktionstemperatur auf 0°C erhöht, wobei das Reaktionsgemisch nach 90 Minuten erstarrte.

Die Reaktionstemperatur wurde dann innerhalb von 60 Minuten auf 22°C erhöht. Nach insgesamt 5 Stunden Reaktionszeit wurde das Reaktionsprodukt mechanisch aus dem Kolben entfernt. Die erhaltene zähe Masse wurde mechanisch zerkleinert.

Zur Dekomplexierung des Polymer-Katalysator-Komplexes wurden in einem 10 l Gefäß mit Ultra-Turrax 3 l entionisiertes Wasser auf 10°C abgekühlt und der zerkleinerte Polymer-Katalysator-Komplex innerhalb von 10 Minuten eingetragen. Die vollständige Dekomplexierung des Polymeren erfolgte innerhalb von 15 Minuten.

Das Polymer wurde abfiltriert und im Luftstrom 30 Minuten getrocknet. Die Extraktion erfolgte kontinuierlich in einem 2 l Planschliffkolben mit KPG-Rührer, Wasserzulauf und Filtrationseinheit. Mit entionisiertem Wasser wurden die ca. 1 mm großen Polymerflocken 8 Stunden bei 60°C mit einer Flußrate von 15 l/h extrahiert. Die Prüfung auf Chloridionen im Filtrat erfolgte mit Silbernitratlösung, wobei nach 4 Stunden kein Chlorid mehr nachweisbar war. Das Polymer wurde abfiltriert und 12 Stunden bei 100°C im Luftstrom vorgetrocknet. Anschließend wurde noch 8 Stunden bei 160°C (1 Torr) getrocknet.

Ausbeute: 110 g (92 % der Theorie)

Zur Bestimmung der Viskosität wurden 0.5 g Polymer in 6 ml Chloroform angequollen und unter Zugabe von 6 ml Trifluoressigsäure gelöst. Die Lösung wurde filtriert und das Polymer aus 180 ml Methanol ausgefällt. Nach der Trocknung (12 h bei 100°C, 8h bei 160°C 1Torr) wurde die inhärente Viskosität in konz. Schwefelsäure zu 0.951 dl/g bestimmt (1 proz. Lösung von $H_2SO_4$ bei 25°C).

Die Bestimmung der Schmelzstabilität erfolgte in einem rheologischen Meßkneter unter Schutzgas. Der relative Drehmomentanstieg einer Polymerschmelze wurde bei 420°C und 60 Upm über einen Zeitraum von 60 Minuten verfolgt.

Ein Anstieg des Drehmomentes von 571 auf 870 relative Einheiten zeigt die sehr gute Schmelzstabilität des Polymeren, wobei als Maßzahl für die Schmelzestabilität der Anstieg nach

$$\Delta M / M_o \cdot 100 \text{ mit}$$

$\Delta M$ Differenz aus Drehmoment Ende und Anfang und
$M_o$ Drehmoment Anfang

zu 52 % bestimmt wurde.

Beispiel 2
(Einsatz von basischem Aluminiumoxid als inertem Füllstoff)

Beispiel 1 wurde wiederholt, es wurden jedoch lediglich 5 g Aluminiumoxid (0.049 mol) eingesetzt.

Es wurde ein Polymer der inhärenten Viskosität 0.879 dl/g erhalten (1 %-ige Lösung in 96 proz. Schwefelsäure bei 25°C).

Ausbeute: 102 g

Ein Anstieg des Drehmomentes von 451 auf 702 relative Einheiten zeigt die sehr gute Schmelzstabilität des Polymeren, wobei als Maßzahl für die Schmelzestabilität der Anstieg zu 55 % bestimmt wurde.

Beispiel 3
(Vergleichsbeispiel: kein Einsatz von basischem Aluminiumoxid)

Beispiel 1 wurde wiederholt, es wurde jedoch kein Aluminiumoxid eingesetzt.

Es wurde ein Polymer der inhärenten Viskosität 0.888 dl/g erhalten. (1 %-ige Lösung in 96 proz. Schwefelsäure bei 25°C)

Ausbeute: 99 g

Ein Anstieg des Drehmomentes von 388 auf 655 relative Einheiten zeigt die deutlich geringere Schmelzstabilität des Polymeren im Vergleich zu den Beispielen 1 und 2, wobei als Maßzahl für die Schmelzestabilität der Anstieg zu 68.8 % bestimmt wurde.

Beispiel 4
(Vergleichsbeispiel: Polykondensation in Gegenwart der Lewis-Base Dimethylsulfon )

Unter den in Beispiel 1 beschriebenen Reaktionsbedingungen wurden umgesetzt:

| | | |
|---|---|---|
| Aluminiumtrichlorid | 147.335 g | 1.1050 mol |
| Dimethylsulfon | 28.239 g | 0.3000 mol |
| Benzoylchlorid | 10.012 g | 0.0070 mol |
| Terephthalsäuredichlorid | 40.605 g | 0.2000 mol |
| 4,4'-Diphenoxybenzophenon | 74.603 g | 0.2040 mol |

wobei die Zugabe von Dimethylsulfon nach der Zugabe von Aluminiumtrichlorid und vor der Zugabe von Benzoylchlorid erfolgte.

Es wurde ein Polymer der inhärenten Viskosität 1.067 dl/g erhalten (1 %-ige Lösung in 96 proz. Schwefelsäure bei 25°C ).

Ausbeute: 97 g

Ein Anstieg des Drehmomentes von 728 auf 1378 relative Einheiten zeigt die geringere Schmelzstabilität des Polymeren im Vergleich zu den Beispielen 1 bis 3, wobei als Maßzahl für die Schmelzestabilität der Anstieg zu 89.3 % bestimmt wurde.

Die folgende Tabelle zeigt die Beispiele Nr. 1 bis Nr. 4 im Vergleich.

| Bsp. Nr. | Füllstoff1) | Füllst. in Gew%2) | Katalysator/CO3) | $\eta_{inh}$ dl/g4) | Stabilität $M_{Ende}/M_o$ |
|---|---|---|---|---|---|
| 1 | $Al_2O_3$ | 20.00 | 1.39 | 0.95 | 1.52 |
| 2 | $Al_2O_3$ | 5.00 | 1.39 | 0.88 | 1.56 |
| 3 | - | 0.00 | 1.39 | 0.89 | 1.69 |
| 4 | $Me_2SO_2$ | 28.24 | 1.84 | 1.07 | 1.89 |

1) Eingesetzter Füllstoff bzw. Lewis-Base (in Bsp.4)
2) Gehalt an Lewis-Base bzw. Füllstoff in Gew% bezogen auf Polymer
3) Molares Verhältnis von $AlCl_3$ zu Carbonylgruppen im Polymer
4) inhärente Viskosität in dl/g (1 proz. Lösung in $H_2SO_4$ bei 25°C nach einmaligem Umfällen aus einer Lösung von Trifluoressigsäure/Chloroform (1:1)
5) Schmelzstabilität $M_{Ende}/M_o$ bestimmt durch rheologischen Meßkneter (Drehmomentanstieg bei 420°C und 60 Upm nach 60 Minuten unter Ar)

## Patentansprüche

1. Verfahren zur Herstellung von Polyaryletherketonen durch elektrophile Polykondensation unter Verwendung von Carbonsäurehalogeniden als Monomerbestandteil in Gegenwart einer Lewis- Säure, dadurch gekennzeichnet, daß der Reaktionsmischung vor oder während der Polykondensation 0,01 bis 60 Gew.%, bezogen auf das Gewicht des hergestellten Polymeren, eines inerten Füllstoffs oder einer während der Aufarbeitung in einen inerten Füllstoff verwandelbaren Komponente zugesetzt werden.

2. Verfahren nach Anspruch 1, dadurch gekennzeichnet, daß man den inerten Füllstoff bzw. die in einen inerten Füllstoff verwandelbare Komponente in einer Menge von 0,1 bis 50 Gew.-%, bezogen auf das Gewicht des hergestellten Polymeren, zusetzt.

3. Verfahren nach einem der Ansprüche 1 bis 2, dadurch gekennzeichnet, daß man die Polykondensation in Abwesenheit einer Lewis-Base durchführt.

4. Verfahren nach einem der Ansprüche 1 bis 3, dadurch gekennzeichnet, daß man die Polykondensation in einem inerten Lösungsmittel durchführt.

Europäisches Patentamt

# EUROPÄISCHER RECHERCHENBERICHT

Nummer der Anmeldung
EP 95 11 0215

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | EP-A-0 264 194 (RAYCHEM LTD) 20.April 1988<br>* Seite 9; Tabelle 1 *<br>* Anspruch 1 *<br>--- | 1 | C08G61/12 |
| A | FR-A-2 226 429 (RAYCHEM CORP) 15.November 1974<br>* Anspruch 1 *<br>----- | | |

RECHERCHIERTE SACHGEBIETE (Int.Cl.6)

C08G
C08K

Der vorliegende Recherchenbericht wurde für alle Patentansprüche erstellt

| Recherchenort | Abschlußdatum der Recherche | Prüfer |
|---|---|---|
| DEN HAAG | 17.Oktober 1995 | Stienon, P |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P04C03)